# EUROPÄISCHE PATENTANMELDUNG

(11) **EP 0 931 873 A1**
(43) Veröffentlichungstag der Anmeldung: **28.07.1999**
(21) Anmeldenummer: 98123577.3
(22) Anmeldetag: 10.12.1998
(51) Int. Cl.: D21B 1/32, D21F 1/70, D21D 5/02

(54) **Verfahren zur Entfernung von Verunreinigungen aus einer Faserstoffsuspension**

(30) Priorität: 23.01.1998 DE 19802493
(71) Anmelder: Voith Sulzer Papiertechnik Patent GmbH, 88191 Ravensburg (DE)
(72) Erfinder: Holik, Herbert, 88213 Ravensburg (DE)

(57) **Zusammenfassung**

Das Verfahren dient insbesondere der Abscheidung von Verunreinigungen aus Altpapier-Faserstoffsuspensionen. Es ist geeignet für die Abscheidung von Klebern (stickies). In einer mehrstufigen Naßsiebung (3), bei der jeweils die Rejekte der Sortiervorrichtungen (7, 7') in die nachfolgende Stufe eingeführt werden, wird erfindungsgemäß die Rejekt-Fraktion (8') vorzugsweise der vorletzten Stufe in einem Flotationsschritt (5) nachbehandelt und dann der letzten Stufe (6) zugeführt. Auf diese Weise wird besonders wirtschaftlich mit einer relativ kleinen Flotationszelle (12) ein großer Teil der flotierbaren Verunreinigungen ausgeschieden.

## Beschreibung

Die Erfindung betrifft ein Verfahren zur Entfernung von Verunreinigungen aus einer Faserstoffsuspension gemäß dem Oberbegriff des Anspruchs 1.

Bekanntlich enthalten Faserstoffsuspensionen, insbesondere solche, die aus Altpapier gewonnen worden sind und zur Papiererzeugung eingesetzt werden sollen, eine mehr oder weniger große Menge von unerwünschten Begleitstoffen, sogenannten Störstoffen, die in der Aufbereitungsanlage entfernt werden müssen. Die Entfernung von Störstoffen wird zumeist in verschiedenen Schritten durchgeführt, da eine Stoffreinigung in einem einzigen Verfahrensschritt fast nie gelingt. Als besonders wirksam zur Entfernung von Verunreinigungen haben sich Naßsiebverfahren erwiesen. Bei diesen wird die Suspension in eine Siebvorrichtung geführt und in mindestens zwei Fraktionen aufgeteilt, und zwar eine Gutstoff-Fraktion, also in die Stoffe, die das Sieb passiert haben, und eine Rejekt-Fraktion, das sind die Stoffe, die aufgrund ihrer Größe abgewiesen wurden. Allgemein hat sich in der Fachsprache des Papiermachers eingeführt, solche Naßsiebvorgänge als Sortierung zu bezeichnen. Es ist auch bekannt, die abgewiesenen Stoffe, also die Rejekt-Fraktion, einer oder mehreren weiteren nachgeschalteten Siebstufen zuzuführen. Man spricht in solchen Fällen von einer mehrstufigen Sortierung. Mehrstufige Sortierung kann an verschiedenen Stellen der Papierfaserstoffaufbereitung durchgeführt werden, wobei im allgemeinen gilt, daß je später diese im Verfahrensablauf erfolgt, umso feiner die dabei verwendeten Sieböffnungen gewählt werden können. Beispiele zur mehrstufigen Naßsiebung der hier betrachteten Art zeigt der Fachaufsatz "Sortierung von Altpapierstoff zur Herstellung von graphischen Papieren" von R. Rienecker aus dem Wochenblatt für Papierfabrikation Nr. 23/24, 1997, Seiten 1149 bis 1159.

Obwohl bereits eine Vielzahl von verschiedenen Systemschaltungen zur Reinigung von Papierfaserstoffsuspensionen bekannt sind und angewendet werden, gelingt es nicht immer, sämtliche störenden Verunreinigungen aus der Suspension zu entfernen. Insbesondere sehr feine, klebende Verunreinigungen, welche oft auch in kleinen Mengen große Schwierigkeiten bei der Erzeugung von Papier machen, können - wenn überhaupt - nur mit großem Aufwand entfernt werden.

In der US 5,580,446 wird ein Drucksortierer beschrieben, in welchem die Flotation von Farbpartikeln praktiziert wird. Dazu wird die Stoffsuspension mit Luft zusammen zugeführt, so daß sich Luftblasen bilden, die zusammen mit der Suspension in den zentralen Bereich des Drucksortierers einströmen. Fasern und ein großer Teil des Wassers können die Sieböffnungen passieren. Infolge der Rotationsbewegung des Siebräumers wird im zentralen Bereich des Sortierers ein Wirbel erzeugt, mit dessen Hilfe die Luftblasen zusammen mit daran angehängten Farbpartikeln oder sonstigen feinen hydrophoben Stoffen aufwärts geführt und als Rejekt abgezogen werden. In einem weiteren Verfahrensschritt erfolgt die Abtrennung des Schaumes vom Rejektstrom. Anschließend wird der Rejektstrom neu belüftet und einer weiteren Vorrichtung der bereits beschriebenen Art zugeführt. Dieses Verfahren benutzt den Drucksortierer als Flotationsvorrichtung. Es ist sowohl von der Verfahrensführung als auch von den erforderlichen Vorrichtungen her sehr aufwendig.

Der Erfindung liegt die Aufgabe zugrunde, ein Verfahren zu schaffen, mit dem eine besonders gute Entfernung von Verunreinigungen möglich ist und gleichzeitig der erforderliche verfahrenstechnische Aufwand akzeptabel bleibt.

Diese Aufgabe wird durch die im Kennzeichen des Anspruchs 1 genannten Merkmale in vollem Umfang gelöst.

Bei einer üblichen mehrstufigen Naßsiebung der hier bekannten Art werden die Rejekte der vorhergehenden Sortierstufe in den Einlauf der nachfolgenden Sortierstufe eingeführt. Dabei kann man davon ausgehen, daß die Zusammensetzung der Rejekte unterschiedlich ist, je nach dem, ob es sich um die erste, zweite oder folgende Stufe handelt. Und zwar nimmt im allgemeinen die Schmutzfracht der Rejekte von Stufe zu Stufe zu. Außerdem muß man bei allen Bemühungen, eine möglichst gute Trennschärfe von Sortiervorrichtungen zu erzielen, bei technischen Vorgängen davon ausgehen, daß ein gewisser, wenn auch möglichst geringer Anteil von den auszusortierenden Störstoffen in den Gutstoff gelangt. Daher steigt auch die Schmutzfracht der Gutstoffe von Stufe zu Stufe an, weshalb im allgemeinen der Gutstoff der letzten Stufe den vergleichsweise höchsten Störstoffanteil enthält. Das trifft besonders bei solchen Störstoffen zu, die sehr fein sind oder nicht sehr formstabil und daher bei der Naßsiebung leichter in den Gutstoff gelangen können.

Durch das erfindungsgemäße Verfahren ist ein besonders wirtschaftlicher Weg gefunden worden, solche Störstoffe quantitativ auszuscheiden. Dabei wird ausgenutzt, daß die Schmutzfracht der Rejekte von Stufe zu Stufe zunimmt. Gerade die erwähnten Störstoffe lassen sich durch ein Flotationsverfahren besonders effektiv ausscheiden, sofern sie hydrophob sind. Dazu gehören besonders die schon erwähnten Kleber (stickies). Dabei wird ein Flotationsverfahren angewendet, welches selektiv arbeitet, also die hydrophilen Fasern im Gutstoff beläßt und lediglich die Störstoffe im Flotationsschaum aufkonzentriert Solche selektiven Flotationsverfahren sind weithin bekannt, müssen hier also nicht beschrieben werden. Zweckmäßigerweise wird die Suspension vor der eigentlichen Flotation so vorbereitet, daß ein möglichst großer Anteil der darin enthaltenen Störstoffe flotierbar ist. Solch eine Vorbereitung kann mechanisch erfolgen, besonders aber auch chemisch. Es ist nämlich zweckmäßig, mit chemischen Mitteln die Oberflächen-Aktivität der auszuflotierenden Stoffe zu erhöhen, um ihre Hydrophobie zu verstärken.

Die Schmutzbeladung des Zulaufes zur letzten Sortierstufe ist wegen des vorangehenden Flotationsschrittes deutlich reduziert. Das hat in der Praxis zur Folge, daß die Rejektmenge, die in der letzten Stufe anfällt, relativ klein gewählt werden kann, wodurch die Faserverluste abnehmen.

Die Erfindung und ihre Vorteile werden erläutert anhand von Zeichnungen. Dabei zeigen:
- Fig. 1: ein grundsätzliches Verfahrensschema zur Durchführung des Verfahrens;
- Fig. 2 und 3: je eine Variante des Verfahrens.

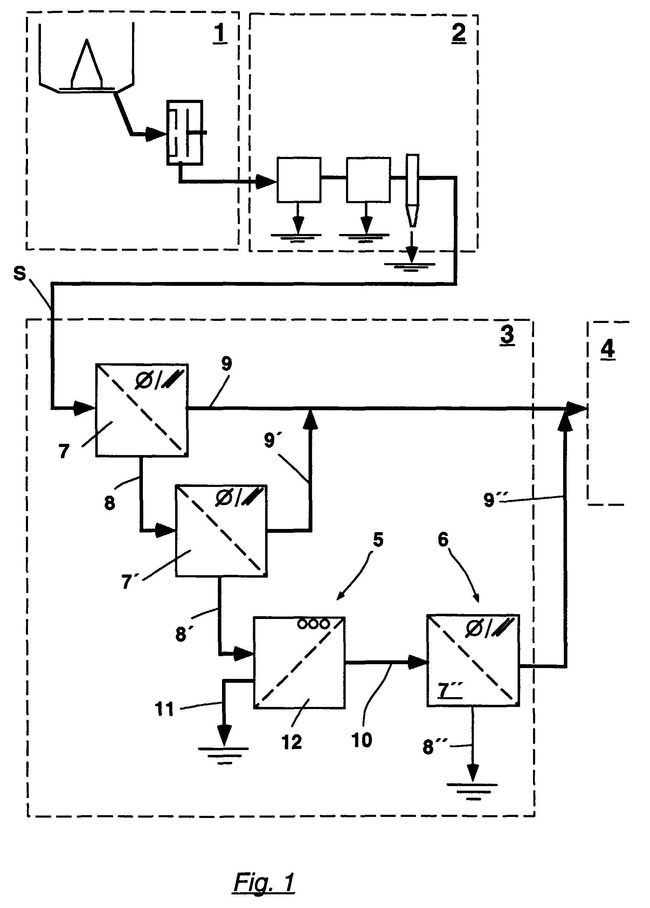

In Fig. 1 sieht man die Aufteilung des Verfahrens in die Einzelschritte: Auflösung 1, Vorreinigung 2, Naßsiebung 3 und Weiterverarbeitung 4. Bekanntlich wird bei der Auflösung der zu verarbeitende Papierfaserstoff mit Wasser vermischt und so weit zerkleinert, daß eine pumpfähige, eventuell auch stippenfreie Suspension entsteht. Zumeist wird auch frühzeitig die Vorreinigung 2 durchgeführt, z.B. mit Hilfe von Hydrozyklonen oder Grobstoff-Sortierem. Es kann aber auch schon hier eine Entfernung von Druckfarben, das sogenannte Deinking, vorgenommen werden. Auch die Auflösung kann an dieser Stelle des Prozesses weit fortgeschritten sein. Der Stoff kann mit Vorteil entstippt oder dispergiert und damit für die Naßsiebung optimal vorbereitet sein. Auflösung 1 und Vorreinigung 2 sind zumeist nicht getrennt, wie hier vereinfacht dargestellt, sondern finden in Teilschritten und abwechselnd statt.

Nach Durchführung dieser beiden Verfahrensschritte gelangt die Suspension S in die mehrstufige Naßsiebung 3. Diese enthält in dem dargestellten Beispiel drei Sortiervorrichtungen 7, 7', 7''. In den Sortiervorrichtungen befindet sich mindestens ein Sieb, entweder mit Loch- oder Schlitzöffnungen, welches die einströmende Suspension S in die Gutstoff-Fraktion 9 bzw. 9' bzw. 9'' und die Rejekt-Fraktion 8 bzw. 8' bzw. 8'' aufteilt. Die letzte Rejekt-Fraktion wird mit 8'' bezeichnet. Die hier gezeigte Naßsiebung 3 ist dreistufig. Dabei sind die Sortiervorrichtungen so geschaltet, daß die folgende Stufe jeweils die Rejekt-Fraktion der vorgeschalteten Stufe aufnimmt. Zusätzlich wird die Rejekt-Fraktion 8' vor der letzten Stufe in einem Flotationsschritt 5 behandelt, wozu eine Flotationszelle 12 dient. Dabei werden die flotierbaren Störstoffe möglichst vollständig in der Rejekt-Fraktion 11, also mit dem Flotationsschaum, abgeführt Die gereinigte Faserstoffsuspension, d.i. die Gutstoff-Fraktion 10 gelangt in die letzte Stufe 6 der Naßsiebung 3. Deren Gutstoff-Fraktion 9'' wird zusammen mit den übrigen Gutstoff-Fraktionen 9, 9' in die Weiterverarbeitung 4 abgeführt.

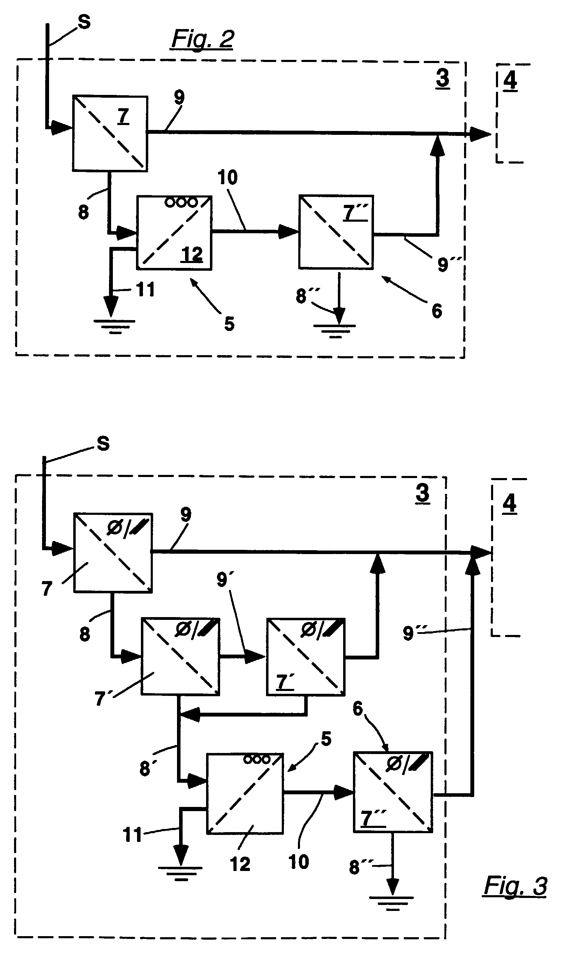

Das hier gewählte Beispiel einer dreistufigen Naßsiebung dürfte in vielen Fällen das technisch- wirtschaftliche Optimum sein. Eventuell müssen auch mehr als drei Stufen gewählt werden. Das hängt von den Verhältnissen und Anforderungen ab. Gerade wegen der effektiven Störstoffentfernung durch das erfindungsgemäße Verfahren können aber oft bereits zwei Stufen ausreichen, wie in Fig. 2 gezeigt.

Bei der Ausgestaltung gemäß Fig. 3 werden besondere Maßnahmen unternommen, um den Gutstoff der zweiten Stufe zu verbessern. Dazu werden zwei Sortiervorrichtungen 7' bezüglich der Gutstoffe hintereinandergeschaltet und die zusammengefaßten Rejekte 8' der Flotationszelle 12 zugeführt. Die Gutstoff-Fraktion 9' der zweiten Stufe kann auf diese Weise qualitativ der Gutstoff-Fraktion 9 aus der ersten Stufe angeglichen werden.

Bekanntlich wird die Wirkung im Sortierverfahren wesentlich von der Stoffdichte und der Größe der Sieböffnungen beeinflußt. Es ist z.B. üblich, die Faserstoffsuspension in einer Aufbereitungsanlage z.B. mit Stoffdichten um 2 - 4 % und Lochsieben um ca. 2 mm zu sortieren und an anderen Stellen mit Schlitzen von einer Weite, die bei ca. 0,2 oder gar 0,1 mm liegt und Stoffdichten unter 1 %. Für beide genannten Beispiele ist das erfindungsgemäße Verfahren anwendbar, wobei die Ergebnisse natürlich unterschiedlich sind. Auch bei Sortierern mit Schlitzen von ca. 0,2 mm Weite sind Stoffdichten um 2 - 3 % möglich. Das führt zu einem relativ großen Massendurchsatz bei guter Sortierqualität und daher zu optimalem technisch-wirtschaftlichen Betrieb. Da aber gerade bei solchen Bedingungen Probleme speziell mit klebenden Störstoffen (stickies) auftreten können, ist das erfindungsgemäße Verfahren hier besonders sinnvoll anzuwenden. Dabei kann die der Flotation nachfolgende Naßsiebung, also die letzte Stufe 6, mit der deutlich geringeren Stoffdichte des Flotationsschrittes 5 durchgeführt werden. Da die Faserstoffmenge der Gutstoff-Fraktion 10 relativ gering ist, muß dann trotz geringer Stoffdichte die Größe der Sortiervorrichtung 7'' nicht zu groß gewählt werden.

## Patentansprüche

1. Verfahren zur Entfernung von Verunreinigungen aus einer Faserstoffsuspension (S), insbesondere einer Altpapier-Faserstoffsuspension,
- wobei der Faserstoff nach seiner Suspendierung in Wasser, der sogenannten Auflösung (1) und eventueller Vorreinigung (2) in einer mehrstufigen Naßsiebung (3) gereinigt wird,
- bei der jeweils mindestens eine Rejekt-Fraktion (8, 8', 8'') auf Grund ihrer Form und Größe am Sieb zurückgehalten und jeweils mindestens eine Gutstoff-Fraktion (10) durch das Sieb hindurchgeführt wird,
- wobei mindestens zwei, vorzugsweise drei Siebvorrichtungen (7, 7', 7'') so miteinander verbunden sind, daß die Rejekt-Fraktion (8, 8') in die nachgeschaltete Siebvorrichtung (7', 7'') eingeführt wird,
- und zwar so lange, bis die letzte Stufe (6) der Naßsiebung (3) erreicht ist, bei der dann die letzte Rejekt-Fraktion (8'') anfällt,
**dadurch gekennzeichnet**,
daß mindestens eine Rejekt-Fraktion (8, 8') aus mindestens einer der der letzten Stufe (6) vorangehenden Stufe durch mindestens einen Flotationsschritt (5) gereinigt wird, dessen Gutstoff-Fraktion (10) einer nachfolgenden Stufe der Naßsiebung zugeführt wird.

2. Verfahren nach Anspruch 1,
**dadurch gekennzeichnet**,
daß die Rejekt-Fraktion (8, 8'), die den höchsten Anteil an flotierbaren Störstoffen aufweist, im Flotationsschritt (5) gereinigt wird.

3. Verfahren nach Anspruch 1 oder 2,
**dadurch gekennzeichnet**,
daß die Rejekt-Fraktion (8') der vorletzten Stufe im Flotationsschritt (5) gereinigt wird.

4. Verfahren nach einem der voranstehenden Ansprüche,
**dadurch gekennzeichnet**,
daß als Siebvorrichtungen (7, 7', 7'') geschlossene Drucksortierer verwendet werden.

5. Verfahren nach Anspruch 4,
**dadurch gekennzeichnet**,
daß die Drucksortierer mit Sieben ausgestattet sind, deren freie Sieböffnungen Schlitze mit einer Schlitzweite zwischen 0,08 und 0,5 mm aufweisen.

6. Verfahren nach Anspruch 4,
**dadurch gekennzeichnet**,
daß die Drucksortierer mit Sieben ausgestattet sind, deren freie Sieböffnungen Löcher sind mit einem Durchmesser zwischen 0,8 und 3 mm.

7. Verfahren nach Anspruch 4, 5 oder 6,
**dadurch gekennzeichnet**,
daß der Trockengehalt der Faserstoffsuspension (S) in der ersten Stufe der Naßsiebung (3) auf einen Wert zwischen 0,6 und 2,5 % eingestellt wird.

8. Verfahren nach Anspruch 4, 5 oder 6,
**dadurch gekennzeichnet**,
daß der Trockengehalt der Faserstoffsuspension (S) in der ersten Stufe der Naßsiebung (3) auf einen Wert zwischen 2 und 4 % eingestellt wird.

9. Verfahren nach einem der voranstehenden Ansprüche,
**dadurch gekennzeichnet**,
daß der Flotationsschritt (5) in einer selektiv arbeitenden Flotationszelle (12) durchgeführt wird.

10. Verfahren nach einem der voranstehenden Ansprüche,
**dadurch gekennzeichnet**,
daß die zu reinigende Suspension (S) Kleberpartikel (stickies) enthält.

11. Verfahren nach einem der voranstehenden Ansprüche,
**dadurch gekennzeichnet**,
daß die Suspension vor oder bei Durchführung des Flotationsschrittes (5) einer chemischen Behandlung unterzogen wird, bei der die Oberflächen-Aktivität der Störstoffe, insbesondere der Kleberpartikel (stickies) erhöht wird.
